Europäisches Patentamt

(19) European Patent Office

Office européen des brevets

(11) Publication number: **0 155 715**
**B1**

(12) **EUROPEAN PATENT SPECIFICATION**

(45) Date of publication of patent specification: **08.11.89**

(21) Application number: **85200202.1**

(22) Date of filing: **16.02.85**

(51) Int. Cl.⁴: **H 02 H 5/04,** H 05 B 3/34

(54) **Electrically heated device comprising a heating cable and a safety circuit against excess heat.**

(30) Priority: **23.03.84 NL 8400920**

(43) Date of publication of application:
**25.09.85 Bulletin 85/39**

(45) Publication of the grant of the patent:
**08.11.89 Bulletin 89/45**

(84) Designated Contracting States:
**AT BE CH DE FR GB IT LI LU NL SE**

(56) References cited:
**GB-A-2 028 607**
**GB-A-2 028 608**
**GB-A-2 056 204**
**GB-A-2 086 676**

(73) Proprietor: **Koninklijke Fabriek Inventum Fabriek van Instrumenten en Electrische Apparaten N.V.**
**Leijenseweg 101 P.O. Box 4**
**NL-3720 AA Bilthoven (NL)**

(72) Inventor: **van der Wansem, Pieter Johan**
**Nassaulaan 31**
**NL-3761 BS Soest (NL)**

(74) Representative: **Noz, Franciscus Xaverius, Ir. et al**
**Boschdijk 155 P.O. Box 645**
**NL-5600 AP Eindhoven (NL)**

## Description

The invention relates to a heating device comprising a heating cable having a heating wire and a sensing wire separated by insulating material having an inversely proportional temperature dependence for the electrical resistance, at least one fuse member connected with a respective end of the heating wire and passing current to the heating wire during operation and a safety member including at least one current sensing member connected between the sensing wire and at least one end of the heating wire, and being arranged after the fuse member(s) and connected with the sensing wire for interrupting the current supply to the heating wire in the event of excess heat, in which case at least part of the current supplied to the heating wire occurs as a leakage current at the sensing wire.

A device of the kind set forth is known from British Patent Application 2,028,607.

In this known device the safety member is a resistor connected electrically to the sensing wire and thermally coupled with a fuse member.

For destroying the fuse member in the event of excess heating the resistor has to generate the required amount of heat, for which purpose a proportionally high current is required. This means that the sensing wire has to pass this high current, which can only be the case when the resistance of the insulating material is very low or when a short-circuit occurs between the heating wire and the sensing wire due to fusion of the insulating material at a high temperature.

In case of quite local excess heat a short-circuit must occur in this device between the heating wire and the sensing wire in order for the sensing wire to pass sufficient current for heating the resistor to an extent such that the fuse member is destroyed, since if the insulation does not melt as a result of the integrating effect of the sensing wire, the current passing through it is too low. This means that in the case of quite local excess heat the current supply will not be interrupted until the heating cable is irreparably damaged. Since the heating cable is often arranged, for example, in an electrically heated bed cover, this bed cover also becomes useless due to the irreparable damage of the heating cable and it has to be replaced as a whole, which brings about higher expenses.

From a technical point of view the required thermal coupling of the resistor with the fuse member constitutes a restricting factor in designing the heating device concerned.

A device of the kind set forth in the preamble of the description, albeit without fuse member(s), also is known from British Patant Application 2,086,676.

In this known device the safety member is an electromagnetic relay, which comprises normally closed contacts and a coil magnetically coupled to the contacts, and which is connected so as to disable the heating wire when the coil conducts sufficient current for the contacts to be opened.

It is known that an electromagnetic relay draws a relatively large amount of current when energised. The sensing wire has to furnish such a high current. If not, the contacts will remain closed or will close again after previous opening. So this known device does not only have the drawback that it requires a high current through the sensing wire, but also the shortcoming that the device again will come into operation as soon as the current through the sensing wire is not high enough to energize the electromagnetic relay.

The invention has for its object to obviate at least one of the said disavantages and provides for this purpose a device of the kind set forth in the preamble which is characterized in that the safety member comprises at least one switching member connected parallel to the heating wire and that said current sensing member actuates the respective switching member upon detection of a leakage current so that the heating wire is short-circuited.

Preferably the combined current sensing member and switching member are formed by reed relays in which the switching contacts form the switching member and the energizing coil constitutes the current sensing member. The energizing coil is connected by one end to the sensing wire and by the other and through a respective diode to the respective end of the heating wire. Any leakage current ocurring at the sensing wire due to excess heat, even quite local excess, need only have an amplitude of the order to a few mA to cause the energizing coil of the reed relay to close the switching contacts thereof. Owing to said diodes the leakage current is full-wave rectified. By the closure of the contacts of the reed relay the heating wire is short-circuited so that the current is interrupted by the destruction of a fuse member in the form of a current fuse.

Preferably the safety member is a double member, that is to say, it is preferred to use two current sensing members and two switching members or two reed relays.

The choice of the components i.e. of reed relays and diodes is such that as a result of a short-circuit current abnormally high temperatures cannot occur in the circuit.

In view of the relatively simple and hence cheap structure of the safety member it is not an objection that due to the short-circuit current the switching contacts of the reed relays may weld together because the safety member can be replaced at low cost.

An important advantage of the invention is that the safety means rapidly respond to disturbances so that the risk of a disturbance resulting in destruction of the heating cable is small and not only risk of fire is avoided. The heating device comprising, for example, the electrically heated bed cover, can again be taken into use after replacement of one or two fuse members and, as the case may be, of the safety member when the cause of the disturbance is obviated.

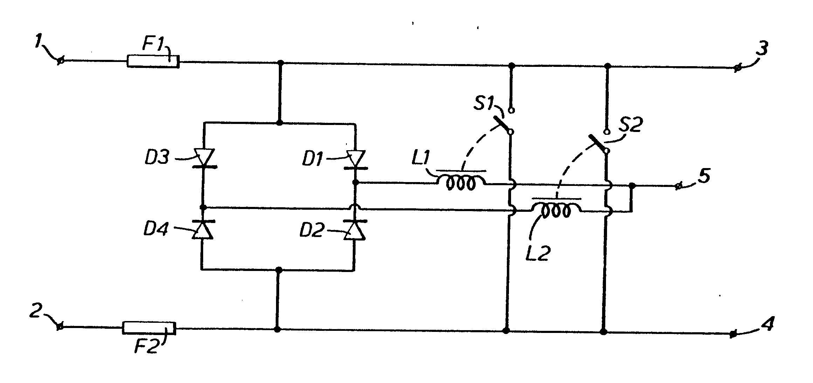

The invention will now be described more fully with reference to a potential embodiment of the invention and to the drawing showing in a single Figure a simple circuit arrangement of a preferred embodiment of the heating device in accordance with the invention.

In the heating device, in particular comprising an electrically heated blanket, cushion or the like, the heating cable may be a coaxial heating cable. Around a core providing the strength of the heating cable is wound the heating wire or sensing wire, on which an envelope of insulating material is arranged, the assembly being enclosed in a sleeve of insulating material. The insulating material between the heating wire and the sensing wire has an inversely proportional temperature dependence for the electrical resistance. Due to local impermissible excess heat of the heating wire, for example, resulting from incorrect use of the blanket, the insulating material between the heating wire and the sensing wire becomes hotter so that the electrical resistance of the insulating material decreases. Therefore, at a given temperature of the insulating material leakage current will occur at the sensing wire, which leakage current is at least part of the current fed to the heating wire. The invention is, however, not limited to this specific type of heating cable. A separate heating cable and an separate sensing cable could be used as long as the two cables are thermally coupled with one another. The sensing cable may comprise two sensing wires separated from one another by the insulating material. However, a coaxial cable is preferred. It is noted that such heating cables are part of the prior art; for this reason the heating cable is not shown in the drawing.

It is furthermore known per se in the prior art to arrange a current supply control-member between a power supply member or a connecting member to the mains and the heating wire via a fuse member. A potentiometer of the current supply control-member can then be manually set in a given position, after which in operation the desired temperature is set, for example, by continuous adjustability, whilst in dependence on the position of the potentiometer the current supply control-member supplies in successive intervals of a given duration a number lower than or equal to a maximum number of alternating half periods of an alternating current to the heating wire. The number of half periods determines the temperature attainable by the heating wire.

The sensing wire may at the same time be a control-wire when it is not made from a good conductor such as copper, but made from a material having a positive temperature dependence for the electrical resistance such as nickel, in which case the resistance of the sensing wire is a measure for the temperature of the heating cable and indirectly for the electrically heated bed cover in which it is used. The sensing/control-wire can then be included in a feedback loop of the current supply control-member so that the current supply can be controlled so that the desired, set value is maintained. The sensing/control-wire itself provided a safeguard against excess heat, in the case of excess heat the temperature of the sensing/control-wire increases and the current supply is reduced. It is noted that in the event of quite local excess heat the resistance variation along a very small part of the sensing/control-wire cannot provide optimm safety due to the integrating effect of said wire.

It is furthermore possible to use a good conductor for the sensing wire, whilst at a given suitable place in the electrically heated bed cover in which the heating cable is arranged a resistor having a positive temperature coefficient is arranged and included in the sensing wire.

Referring to the Figure of the drawing reference numerals 1 and 2 designate connecting points for a supply source or the electric mains and reference numerals 3 and 4 designate connecting points of a current supply control-member (not shown) or the heating wire. Reference numeral 5 designates a connecting point preferably of both ends of the sensing wire. The advantage of the connection 5 to both ends of the sensing wire is that in the event of an interruption between the place of the leakage current and one end of the sensing wire the leakage current can flow through a non-interrupted part of the sensing wire to the other end thereof. A fuse member, in this case a current fuse F1 and F2 are connected to the points 1 and 2 respectively. It may be the normal fuses used in conventional electrically heated bed covers, in which case a single fuse member might be sufficient.

In the circuit arrangement shown in the drawing the safety member includes two topologically identical subcircuits D1, D2, L1, S1 and D3, D4, L2, S2 in order to maintain an effective safety in the case of a single defect of a component, for example a breakdown or an interruption. This double arrangement is not necessary, but it is, indeed, preferred. Since the operations of said subcircuits are identical, the operation of only one will be described more fully.

In the event of excess heat, as stated above, a leakage current occurs between the heating wire and the sensing wire to the order of magnitude of a few mA in the case of a quite local excess heat. This leakage current occurs at the terminal 5 and flows either from terminal 1, member fuse F1, diode D1 and current sensing member or inductor L1 or from terminal 2 through the fuse member F2, diode D2 and current sensing member or inductor L1. Preferably the current sensing member responds to currents of the order of magnitude of a few mA so that the safety member provides protection against the so-called "hot spots". In fact the leakage current is full wave rectified by the diodes D1 and D2. This is not necessary, but it provides an improved, more secure safety. In fact even the current sensing member L1 alone could be connected through one of the fuses members F1, F2 to a connecting point concerned.

The current sensing member L1, when responding to the detection of a current, actuates the switching member S1, which may, as an alternative, be a suitable electronic switch actuated by the sensing member L1; the closure of the switching member S1 results in that at least one of the fuse members F1, F2 interrupts the connection between the connecting points 1 and 3 or 2 and 4.

In a preferred embodiment the current sensing member L1 and the switching member S1 are formed by a reed relay the coil of which is the current sensing member L1 and the tongues or fingers of which are the switching member S1. The use of reed relay has the advantage that they are cheap and that there are types responding to currents of the order of magnitude of a few mA. Due to the short-circuit current the contacts of the reed relay may weld together. This could be avoided by limiting the short-circuit current in dependence on the desired response time or by choosing a type of reed relay that can pass higher currents. Welding of the contacts together need, however, not be an objection because the safety member can be made replaceable at low cost because a very small number of relatively cheap components are used. The choice of the components is such that as a result of the short-circuit current no abnormally high temperatures can occur in the safety circuit.

The invention thus provides a heating device comprising a cheap, safe, secure and readily replaceable safety or protecting circuit which ensures even in the case of quite local excess heat that the heating device proper will not be irreparably damaged. At least the preferred embodiment satisfies the safety prescriptions in this domain or technical field and it is, therefore, safe to the user.

The reference numerals (if any) used in the claims are only meant to explain more clearly the intention of the invention and are not supposed to be any restriction concerning the interpretation of the claims.

## Claims

1. A heating device comprising a heating cable having a heating wire (3, 4) and a sensing wire (5) separated by insulating material having an inversely proportional temperature dependence for the electrical resistance, at least one fuse member (F1, F2) connected with a respective end of the heating wire and passing current to the heating wire during operation and a safety member including at least one current sensing member (L1, L2) connected between the sensing wire and at least one end of the heating wire, and being arranged after the fuse member(s) and connected with the sensing wire for interrupting the current supply to the heating wire in the event of excess heat, in which case at least part of the current supplied to the heating wire occurs as a leakage current at the sensing wire, characterized in that the safety member comprises at least one switching member (S1, S2) connected parallel to the heating wire, and that said current sensing member actuates the respective switching member upon detection of a leakage current so that the heating wire is short-circuited.

2. Heating device as claimed in Claim 1 characterized in that the connection between the or a current sensing member (L1, L2) and the respective end of the heating wire (3, 4) includes a rectifying diode (D1, D2; D3, D4).

3. A heating device as claimed in Claim 1 or 2 characterized in that the current sensing member (L1, L2) is of a type responding to a current of a few mA.

4. A heating device as claimed in anyone of the preceding Claims charaterized in that the current sensing member (L1, L2) is a reed relay and the switching member (S1, S2) is formed by the switching contacts of the reed relay.

5. A heating device as claimed in anyone of the preceding Claims characterized in that the heating cable (3, 4, 5) is arranged in a given pattern in an electrically heated blanket, cushion or the like.

6. Use of a heating device as claimed in anyone of Claims 1 to 4 in combination with an electrically heated blanket, cushion or the like.

## Patentansprüche

1. Heizvorrichtung umfassend ein Heizkabel mit einem Heizdraht (3, 4) und einem Abtastdraht (5), die voneinander durch Isoliermaterial getrennt sind und einen umgekehrt von der Temperatur abhängigen elektrischen Widerstand haben, mindestens ein Schmelzsicherungselement (F1, F2), das mit dem jeweiligen Ende des Heizdrahtes verbunden ist und Strom zu dem Heizdraht während der Tätigkeit der Vorrichtung zuführt und ein Sicherheitselement, das mindestens ein Strommeßelement (L1, L2) aufweist, das zwischen dem Abtastdraht und mindestens einem Ende des Heizdrahts verbunden ist und nach dem Schmelzsicherungselement Schmelzsicherungselementen angeordnet ist und mit dem Abtastdraht verbunden ist, um die Stromzufuhr zu dem Heizdraht im Fall überflüssiger Hitze zu unterbrechen, in welchem Fall mindestens ein Teil des dem Hitzdraht zugeführten Stromes als Abfallstrom an den Abtastdraht abgeleitet wird, dadurch gekennzeichnet, daß das Sicherheitselement mindestens ein Schaltelement (S1, S2) umfaßt das an den Hitzedraht parallel geschaltet ist und daß das Strommeßelement das jeweiligen Schaltelementtätigt nach feststellung eines Abflußstromes, so daß der Hitzedraht kurzgeschlossen wird.

2. Heizvorrichtung gemäß Anspruch 1, dadurch gekennzeichnet, daß die Verbindung zwischen dem oder dem Strommeßelement (L1, L2) und dem jeweiligen Ende des Heizdrahtes (3, 4) eine Gleichrichterdiode (D1, D2; D3, D4) umfaßt.

3. Heizvorrichtung gemäß Anspruch 1 oder 2, dadurch gekennzeichnet, daß das strommeßelement (L1, L2) einen solchen Typ ist, der auf einen Strom von wenigen mA anspricht.

4. Heizvorrichtung gemäß irgendeinem der vorstehenden Ansprüche, dadurch gekennzeichnet, daß das Strommeßelement (L1, L2) ein Blattrelais ist und das Schaltelement (S1, S2) durch Schaltkontakte des Blattrelais gebildet wird.

5. Heizvorrichtung gemäß irgendeinem der vorstehenden Ansprüche, dadurch gekennzeichnet, daß das Heizkabel (3, 4, 5) in einem vorgegebenen Muster einem elektrisch erhitzten Decke, Kissen oder dergleichen angeordnet ist.

6. Verwendung einer Heizvorrichtung gemäß irgendeinem der Ansprüche 1 bis 4 in Kombination mit einer Heizdecke einem Heizkissen oder dergleichen.

## Revendications

1. Un dispositif chauffant comprenant un câble chauffant comportant un fil chauffant (3, 4) et un fil détecteur (5), séparé par une matière isolante dont la résistance électrique est une fonction inversement proportionnelle à la température, au moins un élément fusible (F1, F2) relié à une extrémité respective du fil chauffant et du courant traversant le fil chauffant pendant le fonctionnement, et un élément de sécurité comprenant au moins un élément détecteur de courant (L1, L2) relié entre le fil détecteur et au moins une extrémité du fil chauffant, et étant disposé après le ou les élément(s) fusible(s) et relié à l'élément détecteur pour interrompre l'alimentation du courant au fil chauffant en cs de température excessive, auquel cas au moins une partie du courant fourni au fil chauffant passe comme courant de fuite au fil détecteur, caractérisé en ce que l'élément de sécurité comprend au moins un élément du commutation (S1, S2) relié en parallèle au fil chauffant, et en ce que ledit élément détecteur de courant actionne l'élément respectif de commutation en cas de détection d'un courant de fuite de sorte que le fil chauffant est court-circuité.

2. Dispositif chauffant selon la revendication 1, caractérisé en ce que la liaison entre l'élément ou un élément détecteur de courant (L1, L2) et l'extrémité respective du fil chauffant (3, 4) comprend une diode redresseuse (D1, D2; D3, D4).

3. Un dispositif chauffant selon la revendication 1 ou 2, caractérisé en ce que l'élément détecteur de courant (L1, L2) est d'un type sensible à un courant de quelques mA.

4. Un dispositif chauffant selon l'une des précédentes revendications caractérisé en ce que l'élément détecteur de courant (L1, L2) est un relai en ampoule et l'élément de commutation (S1, S2) est constitué par les contacts de commutation du relai en ampoule.

5. Un dispositif chauffant selon l'une quelconque des précédentes revendications caractérisé en ce que le câble chauffant (3, 4, 5) est disposé dans une configuration donnée dans une couverture ou un coussin chauffés électriquement ou similaire.

6. Utilisation d'un dispositif chauffant selon l'une des revendications 1 à 4 en liaison avec une couverture, ou un coussin élctriques chauffés électriquement ou similaire.

1
2
3
4
5
S1
S2
L1
L2
D1
D2
D3
D4
F1
F2